# EUROPÄISCHE PATENTANMELDUNG

(11) **EP 3 017 895 A1**
(43) Veröffentlichungstag der Anmeldung: **11.05.2016**
(21) Anmeldenummer: 15184397.6
(22) Anmeldetag: 09.09.2015
(51) Int. Cl.: B22F 3/105, B29C 67/00

(54) **HERSTELLEN EINES BAUTEILS DURCH SELEKTIVES LASERSCHMELZEN**

(30) Priorität: 31.10.2014 DE 102014222302
(71) Anmelder: Siemens Aktiengesellschaft, 80333 München (DE)
(72) Erfinder: Deiss, Olga, 40627 Düsseldorf (DE); Timmermann, Julian, 45891 Gelsenkirchen (DE)

(57) **Zusammenfassung**

Herstellen eines Bauteils durch Selektives Laserschmelzen Es wird ein Verfahren zum Herstellen eines Bauteils durch Selektives Laserschmelzen bereitgestellt, wobei eine Anzahl von nebeneinander angeordneten Lasern ein Laserfeld erzeugt, wodurch pulverförmiges Material selektiv zum Erzeugen von Konturen geschmolzen werden kann. Dabei können einzelne Laser der Laseranordnung selektiv ein- oder ausgeschaltet werden, um bestimmte Bereiche zu bestrahlen oder nicht zu bestrahlen. Weiterhin wird eine Vorrichtung zur Durchführung des Verfahrens bereitgestellt.

## Beschreibung

Die Erfindung betrifft ein Verfahren zum Herstellen eines Bauteils durch Selektives Laserschmelzen mittels einer Anordnung von Lasern, wobei während des Bestrahlens einzelne Laser der Anordnung zum Erzeugen bestimmter Strukturen selektiv ein- oder ausgeschaltet werden.

Bauteile mit komplexer geometrischer Form lassen sich durch spanende Fertigungsverfahren nur sehr aufwändig anfertigen. Herkömmlicherweise sind solche Teile durch verschiedene Gießverfahren erzeugbar. Allerdings ist das Anfertigen einer Gießform teuer und zeitaufwändig. Daher sind Gießverfahren zwar sinnvoll für die Massenproduktion und Serienfertigungen mit genügend Vorlaufzeit, aber nicht für die Fertigung geringer Stückzahlen oder bei erhöhter Dringlichkeit.

Relativ neue Methoden zum schnellen Herstellen von einzelnen Bauteilen sind das Selektive Laserschmelzen (*selective laser melting,* SLM) und das ähnliche Selektive Lasersintern. Dabei wird der zu verarbeitende Werkstoff in Pulverform in einer Schicht auf einer Plattform oder einer Materialschicht aufgebracht. Die Pulverteilchen werden mittels Laserstrahlung lokal vollständig umgeschmolzen. Durch das Verschmelzen der Pulverteilchen werden die Pulverteilchen auch mit einer darunterliegenden Schicht verschmolzen. Gegenüber den oben erwähnten Gussverfahren zeichnet sich das SLM dadurch aus, dass Werkzeuge oder Formen nicht benötigt werden und dadurch in relativ kurzer Zeit Prototypen hergestellt werden können. Weiterhin können durch die große Geometriefreiheit des SLM Bauteile hergestellt werden, die mit formgebundenen Verfahren nicht oder nur mit großem Aufwand herstellbar sind.

Bei dem Verfahren des SLM wird in einer Fläche aus pulverförmigem Material dort Laserstrahlung appliziert, wo Konturen des herzustellenden Bauteils entstehen sollen. Nach dem Schmelzen und nachfolgendem Wiederverfestigen des Materials wird eine neue Schicht aus pulverförmigem Material aufgebracht und die Laserstrahlung erneut appliziert. Durch die Laserstrahlung lässt sich eine sehr hohe Verfahrensgeschwindigkeit realisieren, und lassen sich in innerhalb eines Tages Bauteile aus tausenden Schichten erzeugen. Ein Nachteil besteht allerdings beim Verschmelzen größerer Flächen. Der auftreffende Laserstrahl hat nur eine punktuelle Trefferfläche mit geringem Durchmesser, wodurch die Bestrahlung einer größeren Fläche besonders bei größeren Bauteilen zeitaufwändig ist.

Es besteht damit die Aufgabe, ein Verfahren bereitzustellen, mit dem die Produktivität des SLM zeitlich effektiver gestaltet werden kann. Es besteht weiterhin die Aufgabe, eine Vorrichtung zur Durchführung eines entsprechenden Verfahrens bereitzustellen.

Die erste Aufgabe wird durch ein Verfahren mit den Merkmalen von Anspruch 1 gelöst. Die zweite Aufgabe wird durch eine Vorrichtung mit den Merkmalen von Anspruch 8 gelöst. Weitere vorteilhafte Ausgestaltungen der Erfindung ergeben sich aus den Unteransprüchen, den Figuren und den Ausführungsbeispielen.

Ein erster Aspekt der Erfindung betrifft ein Verfahren zur Herstellung eines Bauteils durch Selektives Laserschmelzen mit den Schritten
S1) Bereitstellen einer Bauplattform in einem Fertigungszylinder,
S2) Aufbringen eines pulverförmigen Materials in einer bestimmten Menge auf der Bauplattform,
S3) Verteilen des Materials über die Bauplattform,
S4) Lokales Verschmelzen von Pulverteilchen durch Wirkung eines Laserstrahls,
S5) Absenken der Plattform,
wobei die Schritte S2 - S5 in einer Anzahl wiederholt werden, wie zum Fertigstellen des Bauteils notwendig sind, und wobei eine Anzahl von nebeneinander angeordneten Lasern ihre Strahlen auf einen zu bestrahlenden Bereich in einer Weise richten, dass der bestrahlte Bereich einer rechteckigen Fläche entspricht.

In dem erfindungsgemäßen Verfahren wird vorteilhaft die auftreffende Energie nicht als Punkt, sondern als längliches Rechteck realisiert. Das Trefferfeld besteht damit aus mehreren, nebeneinander angeordneten Laserpunkten und hat dabei die Form eines Balkens. Das Verfahren ist vorteilhaft, weil durch die Bestrahlung einer Fläche die Produktivität des SLM wesentlich beschleunigt werden kann. Die gesamte abzufahrende Strecke wird im Vergleich zu Verwendung eines einzelnen Lasers reduziert, und es können vergleichsweise größere Flächen in kürzerer Zeit durch Laserwirkung geschmolzen werden. Dabei wird die Strahlung der Laseranordnung, d.h. die Anordnung der nebeneinander angeordneten Laser, die auch als Laserkopf bezeichnet wird, in festgelegten Bahnen über einen zu erzeugenden Bereich des Bauteils geführt.

Dabei ist es besonders bevorzugt, wenn ein oder mehrere der Laser der Laseranordnung zum Erzeugen einer gewünschten Geometrie des Bauteils selektiv und unabhängig von den anderen Lasern ein- oder ausgeschaltet werden. Bevorzugt werden dabei ein oder mehrere Laser selektiv und unabhängig von den anderen Lasern nicht eingeschaltet, wenn zum Erzeugen einer gewünschten Geometrie des Bauteils lokal kein Verschmelzen des Materials erfolgen soll, d.h. keine Kontur erzeugt und dementsprechend keine Bestrahlung erfolgen soll. Ebenfalls bevorzugt werden dabei, wenn alle Laser der Anordnung eingeschaltet sind, entsprechend der zu erzeugenden Konturen in der festgelegten Bahn einzelne Laser der Laseranordnung selektiv und unabhängig von den anderen Lasern ausgeschaltet, wenn zum Erzeugen einer gewünschten Geometrie des Bauteils lokal kein Verschmelzen des Materials erfolgen soll, d.h. keine Kontur erzeugt und dementsprechend keine Bestrahlung erfolgen soll. Wenn in der vorgegeben Bahn wieder eine Kontur erzeugt werden soll, wird der zuvor ausgeschaltete Laser wieder eingeschaltet.

Vorzugsweise weist das im erfindungsgemäßen Verfahren geschmolzene pulverförmige Material ein Metall auf. Vorteilhafterweise lassen sich Metalle leicht in Pulver verarbeiten und durch Schmelzen wieder in kompakte Formen bringen. Metalle sind dabei für viele technische Bauteile geeignete Werkstoffe, z.B. für Turbinenschaufeln. Dabei ist es besonders bevorzugt, wenn das pulverförmige Material aus einer Metalllegierung besteht.

Ein zweiter Aspekt der Erfindung betrifft eine Vorrichtung zur Herstellung eines Bauteils durch selektives Laserschmelzen, besonders zur Durchführung des Verfahrens nach einem der vorherigen Ansprüche, umfassend einen Fertigungszylinder mit einer Bauplattform, einen Vorratszylinder, eine Verteileinrichtung, eine Anordnung einer Anzahl von Lasern und eine Steuereinrichtung, wobei die Anordnung der Laser die Bestrahlung einer rechteckigen Fläche ermöglicht, und die Laser einzeln ein- und ausschaltbar sind. Die Vorteile der Vorrichtung entsprechen dabei denen des erfindungsgemäßen Verfahrens.

Bevorzug sind die Laser der Vorrichtung nebeneinander in einem rechteckigen Muster angeordnet. Die Laser sind in diesem Muster in einer als Laserkopf bezeichneten Anordnung zusammengefasst. Diese Anordnung ermöglicht vorteilhaft die Bestrahlung einer rechteckigen Fläche.

Vorzugsweise wird das Muster der Laserschaltung durch die Steuereinrichtung kontrolliert. Die zu erzeugenden Konturen pro Schicht des Bauteils sind dabei programmiert, so dass die Steuereinrichtung pro abzufahrender Bahn des Laserkopfes vorteilhafterweise berechnen und steuern kann, an welcher Stelle einzelne Laser ab- und/oder einzuschalten sind.

Weiterhin ist der Strahlengang der Laserstrahlen vorzugsweise durch mindestens einen rotierbaren, d.h. durch Rotation verstellbaren Spiegel lenkbar. Die Strahlen der Laser werden durch optische Hilfsmittel parallel auf den oder die rotierbaren Spiegel ausgerichtet, die entsprechend ihrer Einstellung die Strahlen auf die zu bestrahlenden Punkte des herzustellenden Bauteils richten.

Laser sind in der vorliegenden Anmeldung Vorrichtungen, mit denen Laserstrahlen erzeugt werden. Mehrere zusammen nebeneinander angeordnete Laser werden als Laserkopf bezeichnet. Als Laserstrahlengang wird der theoretische Weg eines Laserstrahls bezeichnet, den er entsprechend seiner Ausrichtung durch Laser und rotierbare Spiegel nimmt.

Als Konturen werden feste Bereiche des herzustellenden Bauteils bezeichnet.

Die Erfindung wird anhand der Figuren näher beschrieben. Es zeigen
- Figur 1: eine schematische Darstellung einer beispielhaften Ausführungsform der erfindungsgemäßen Vorrichtung.
- Figur 2: ein Fließdiagramm einer beispielhaften Ausführungsform des erfindungsgemäßen Verfahrens.
- Figur 3: das Verfahren gemäß Fig. 2 in einer schematischen Darstellung
- Figur 4: das Verfahren gemäß Fig. 2 in einer schematischen Darstellung
- Figur 5: eine schematische Darstellung einer durch das Verfahren gemäß Fig. 2 zu bestrahlenden Fläche.

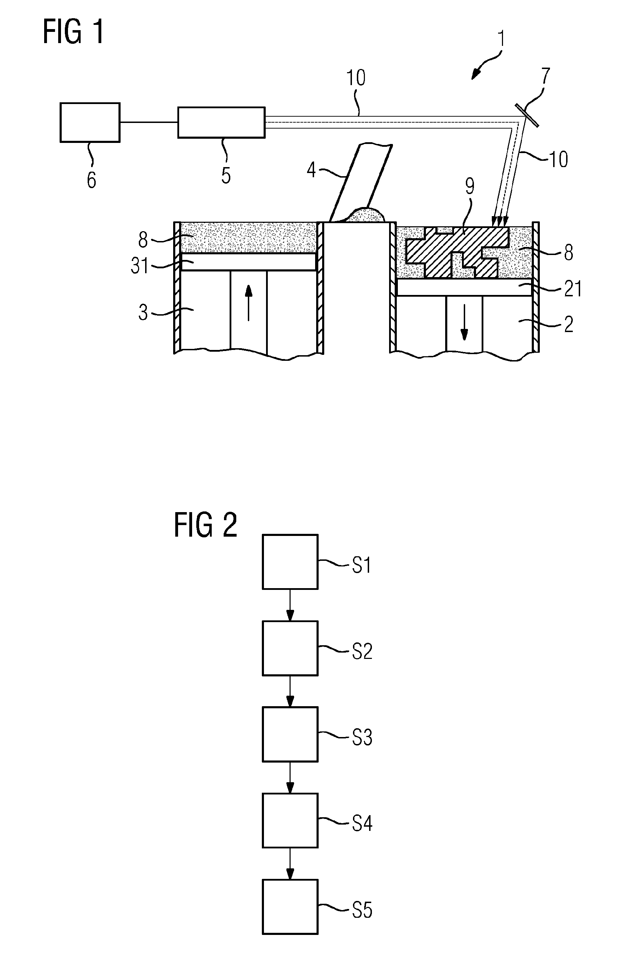

Die Vorrichtung 1 umfasst in der in Fig. 1 beispielhaft dargestellten Ausführungsform einen Fertigungszylinder 2, auf dessen Bauplattform 21 schichtweise das durch Selektives Laserschmelzen (SLM) aus pulverförmigem Material 8 zu fertigende Bauteil 9 erzeugt wird, einen Vorratszylinder 3, der das pulverförmige Material 8 vorrätig hält und aus dem das Material 8 allmählich durch Anheben des Bodens des Vorratsbehälters 31 nach oben und dann schichtweise durch eine Verteileinrichtung 4, auch als Rakel bezeichnet, auf die Bauplattform 21 transferiert und dort verteilt werden kann. Weiterhin umfasst die Vorrichtung 1 eine Anordnung von Lasern 5, auch als Laserkopf 5 bezeichnet, die Laserstrahlen zur Bestrahlung des pulverförmigen Materials 8 auf der Bauplattform 21 generieren. Die Zahl der Laser 5 wird dabei so gewählt, dass sich einerseits eine rechteckige Fläche durch die Laser effektiv bestrahlen und damit schmelzen lässt, und andererseits die nebeneinander angeordneten Laser sich nicht durch Wärmeentwicklung beeinflussen. Die Zahl der Laser beträgt mindestens 2, bevorzugt bis zu 4, ebenfalls bevorzugt bis zu 6, ebenfalls bevorzugt bis zu 10, ebenfalls bevorzugt bis zu 15, ebenfalls bevorzugt bis zu 20, und ebenfalls bevorzugt bis zu 24. Weiterhin weist die Vorrichtung 1 eine Steuereinrichtung 6 auf, die auf der Basis der zu erzeugenden Konturen des Bauteils und einer momentanen Position des Laserkopfes 5 berechnet und steuert, einzelne Laser der Anordnung auszuschalten bzw. einzuschalten. Verstellbare Spiegel 7 sind ausgebildet, den Strahlengang der Laserstrahlen 10 auf das pulverförmige Material 8 auf der Bauplattform 21 zu lenken. Die Verstellung der Spiegel erfolgt software-gesteuert, wobei die Steuereinrichtung 6 zusätzlich ausgebildet ist, die Bewegung der Spiegel zu steuern. Durch Wirkung der Laserstrahlen 10 können durch Schmelzen des pulverförmigen Materials 8 Konturen des zu fertigenden Bauteils 9 erzeugt werden. Die Plattform 21 in dem Fertigungszylinder 2 ist ausgebildet, nach Bildung einer Schicht des zu fertigenden Bauteils 9 um die Dicke bzw. Stärke einer Schicht abgesenkt zu werden, worauf eine neue Schicht des pulverförmigen Materials 8 durch die Verteileinrichtung 4 aufgetragen werden kann.

In der beispielhaft gezeigten Ausführungsform von Fig. 2 wird ein Bauteil durch Selektives Laserschmelzen hergestellt. In Schritt S1 wird dazu eine Bauplattform 21 in einem Fertigungszylinder 2 bereitgestellt. Auf der Bauplattform 21 wird in Schritt S2 pulverförmiges Material, bevorzugt aus einem Metall oder einer Metalllegierung, vom Vorratszylinder 3 mittels der Verteileinrichtung 4 in einer Menge aufgebracht, die für die Bildung einer Schicht adäquat ist. In Schritt S3 wird das aufgebrachte Material 8 auf der Bauplattform 21 durch die Verteileinrichtung 4 verteilt, so dass es eine Schicht in einer Stärke bildet, die sich entsprechend der gewünschten Kontur durch Laserstrahlen gut schmelzen lässt. Bevorzugte Schichtstärken sind dabei 20 - 100 µm.

In Schritt S4 erfolgt ein lokales Verschmelzen pulverförmigen Materials 8 durch Wirkung eines oder mehrerer Laserstrahlen 101, die durch den Laser 5 erzeugt werden und mittels rotierbarer Spiegel 7 software-gesteuert so über die Bauplattform 21 geführt werden, dass die gewünschten Konturen entstehen. Dabei werden die Laserstrahlen 101 von nebeneinander in einem Laserkopf angeordnete Laser 5 auf einen zu bestrahlenden Bereich in einer Weise gerichtet, dass der bestrahlte Bereich einer rechteckigen Fläche entspricht.

Der pulverförmige Werkstoff wird an den Stellen der Laserstrahlung vollständig umgeschmolzen und bildet nach der Erstarrung eine feste Materialschicht. In Schritt S5 wird die Bauplattform 21 um eine Schichtstärke abgesenkt und die Schritte S2 - S5 so lange wiederholt, bis das herzustellende Bauteil 9 fertiggestellt ist. Mit anderen Worten erzeugen die auftreffenden Laserstrahlen 101 nach einem vorgegebenen Muster die Konturen des Bauteils 9 Schicht für Schicht.

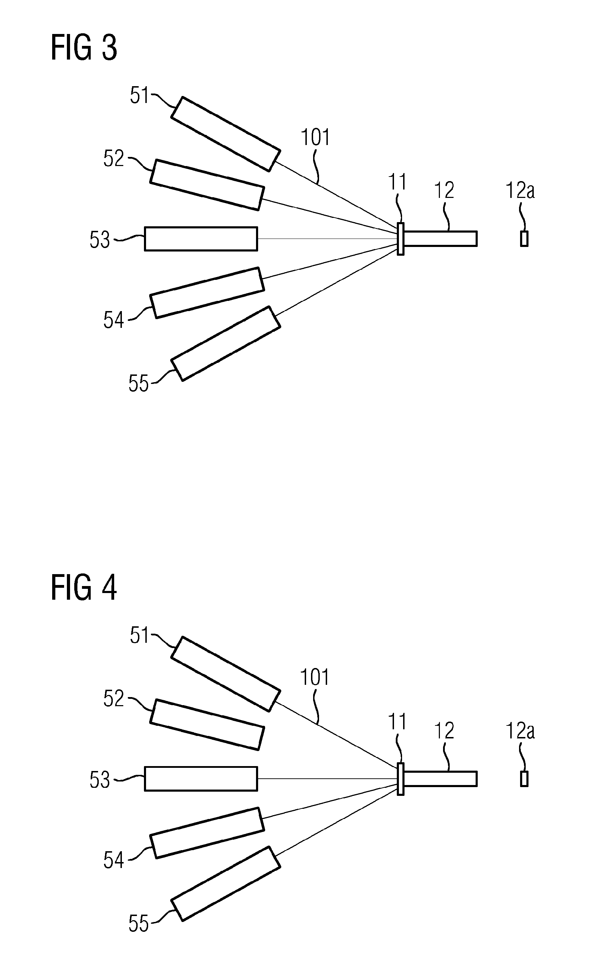

Entsprechend der beispielhaften Darstellung in Figur 3 werden im Laserkopf nebeneinander angeordnete Laser 51, 52, 53, 54, 55 angeregt und emittieren Laserstrahlen 101, die durch eine fokussierende Linse 11 gebündelt und parallel ausgerichtet werden, woraufhin ihr gemeinsamer Strahlengang 12 einen rechteckigen Querschnitt 12a aufweist. Über einen oder mehrere rotierbare Spiegel 7 werden die Strahlen parallel in einem rechteckig geformten Feld 13 über die Bauplattform 21 geführt, so dass in diesem rechteckig geformten Feld Material 8 geschmolzen wird.

In Fig. 4 ist die Laseranordnung von Fig. 3 dargestellt, in der beispielhaft Laser 52 ausgeschaltet ist, weil ein bestimmter Bereich des pulverförmigen Materials 8 nicht geschmolzen werden soll, weil dort keine festen Konturen vorgesehen sind. Soll nach einer vorgesehenen Lücke wieder eine feste Kontur im Strahlengang des Lasers 52 erzeugt werden, wird er wieder eingeschaltet. Das Ausschalten des bzw. das Einschalten des Lasers 52 wird durch die Steuereinrichtung 6 gesteuert.

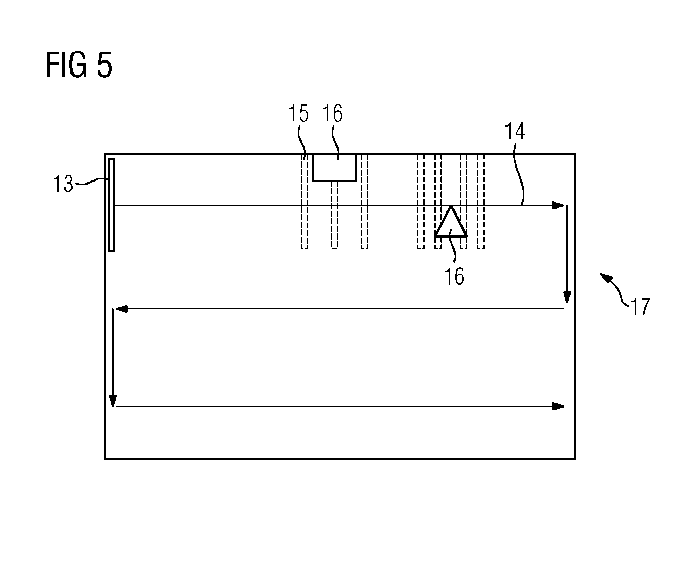

Der geführte Weg des durch die Laserstrahlen gebildeten rechteckig bzw. balkenförmig geformten Laserfeldes 13, auch als Bestrahlungspfad 14 bezeichnet, ist in Fig. 5 durch Pfeile 14 dargestellt. Durch die gestrichelten Linien sind Abschnitte 15 des Materials 8 auf der Bauplattform 21 gekennzeichnet, über denen sich das Laserfeld 13 zu einem bestimmten Zeitpunkt befindet. Die Lücken 16 sind dabei Stellen, die nicht geschmolzen werden sollen. Über diesen Stellen wird ein oder mehrere Laser 5 abgeschaltet, so dass dort meine festen Konturen des herzustellenden Bauteils 9 erzeugt werden.

Für einen Fachmann naheliegende Abwandlungen und Änderungen der Erfindung fallen unter den Schutzumfang der Patentansprüche.

## Patentansprüche

1. Verfahren zum Herstellen eines Bauteils durch Selektives Laserschmelzen mit den Schritten
S1) Bereitstellen einer Bauplattform in einem Fertigungszylinder,
S2) Aufbringen eines pulverförmigen Materials in einer bestimmten Menge auf der Bauplattform,
S3) Verteilen des Materials über die Bauplattform,
S4) Lokales Verschmelzen von Pulverteilchen durch Wirkung eines Laserstrahls,
S5) Absenken der Plattform,
wobei die Schritte S2 - S5 in einer Anzahl wiederholt werden, wie zum Fertigstellen des Bauteils notwendig sind, **dadurch gekennzeichnet, dass**
eine Anzahl von nebeneinander angeordneten Lasern ihre Strahlen auf einen zu bestrahlenden Bereich in einer Weise richten, dass der bestrahlte Bereich einer rechteckigen Fläche entspricht.

2. Verfahren nach einem der vorherigen Ansprüche,
wobei die Laseranordnung in festgelegten Bahnen über einen zu erzeugenden Bereich des Bauteils geführt wird.

3. Verfahren nach Anspruch 1 oder 2,
wobei ein oder mehrere der Laser zum Erzeugen einer gewünschten Geometrie des Bauteils selektiv und unabhängig von den anderen Lasern ein- oder ausgeschaltet werden.

4. Verfahren nach Anspruch 3,
wobei ein oder mehrere Laser selektiv und unabhängig von den anderen Lasern nicht eingeschaltet werden, wenn zum Erzeugen einer gewünschten Geometrie des Bauteils lokal kein Verschmelzen des Materials erfolgen soll.

5. Verfahren nach Anspruch 3,
wobei ein oder mehrere Laser selektiv und unabhängig von den anderen Lasern ausgeschaltet werden, wenn zum Erzeugen einer gewünschten Geometrie des Bauteils lokal kein Verschmelzen des Materials erfolgen soll.

6. Verfahren nach einem der vorherigen Ansprüche,
wobei das pulverförmige Material ein Metall aufweist.

7. Verfahren nach einem der vorherigen Ansprüche,
wobei das pulverförmige Material aus einer Metalllegierung besteht.

8. Vorrichtung (1) zur Herstellung eines Bauteils (9) durch selektives Laserschmelzen,
besonders zur Durchführung des Verfahrens nach einem der vorherigen Ansprüche, umfassend einen Fertigungszylinder (2) mit einer Bauplattform (21), einen Vorratszylinder (3), eine Verteileinrichtung (4), eine Anordnung einer Anzahl von Lasern (5) und eine Steuereinrichtung (6),
**dadurch gekennzeichnet, dass**
die Anordnung der Laser (5) die Bestrahlung einer rechteckigen Fläche (13) ermöglicht, und die Laser (51, 52, 53, 54, 55) einzeln ein- und ausschaltbar sind.

9. Vorrichtung nach Anspruch 8,
wobei die Laser (51, 52, 53, 54, 55) nebeneinander in einem rechteckigen Muster angeordnet sind.

10. Vorrichtung nach Anspruch 8 oder 9,
bei der das Muster der Laserschaltung durch die Steuereinrichtung (6) kontrolliert wird.

11. Vorrichtung nach einem der Ansprüche 8 - 10,
bei der der Strahlengang der Laserstrahlen (10) durch rotierbare Spiegel (7) lenkbar ist.
